# EUROPÄISCHE PATENTSCHRIFT

(11) **EP 1 695 324 B1**
(45) Veröffentlichungstag und Bekanntmachung des Hinweises auf die Patenterteilung: **19.05.2010**
(21) Anmeldenummer: 04803879.8
(22) Anmeldetag: 15.12.2004
(51) Int. Cl.: G09B 19/04, G10L 15/26, A61B 5/16, G01N 33/98

(54) **VERFAHREN ZUR ERMITTLUNG DER SPRACHLICHEN FÄHIGKEITEN VON PROBANDEN**
METHOD FOR DETERMINING THE LINGUISTIC APTITUDES OF TEST PERSONS
PROCEDE DE DETERMINATION DES APTITUDES LINGUISTIQUES DE PERSONNES SOUMISES A DES TESTS

(30) Priorität: 18.12.2003 DE 10360044
(43) Veröffentlichungstag der Anmeldung: 30.08.2006
(73) Patentinhaber: T-Mobile Deutschland GmbH, 53227 Bonn (DE)
(72) Erfinder: LIEDTKE, Klaus, Dieter, 31582 Nienburg (DE); MARKEFKA, Guntbert, 38442 Wolfsburg (DE)
(74) Vertreter: Riebling, Peter
(86) Internationale Anmeldenummer: PCT/EP2004/014257
(87) Internationale Veröffentlichungsnummer: WO 2005/059864

(56) Entgegenhaltungen:
- EP-A- 0 828 240
- WO-A-00/70584
- US-A- 5 857 173
- US-A1- 2002 147 857
- US-A1- 2002 160 341
- US-A1- 2003 182 111
- HOLLIEN HARRY ET AL: "Effects of ethanol intoxication on speech suprasegmentals" JOURNAL OF THE ACOUSTICAL SOCIETY OF AMERICA, AMERICAN INSTITUTE OF PHYSICS. NEW YORK, US, Bd. 110, Nr. 6, Dezember 2001 (2001-12), Seiten 3198-3206, XP012002650 ISSN: 0001-4966

## Beschreibung

Die Erfindung betrifft ein Verfahren zur Ermittlung der sprachlichen Fähigkeiten von Probanden zur Ermittlung eines Blutalkoholwertes nach dem Oberbegriff des Patentanspruchs 1. Unter sprachlichen Fähigkeiten wird im Sinne der Erfindung nicht die Sprachfertigkeit in Bezug auf Redegewandtheit, Wortschatz, grammatikalische Kenntnisse, etc. verstanden, sondern die Fähigkeit eines Probanden, einen (vorgegeben) Text verständlich und fehlerfrei zu sprechen.

Insbesondere bezieht sich die Erfindung auf das Gebiet der maschinellen Spracherkennung. Spracherkennung ist ein Verfahren der Sprachanalyse, bei dem ein computerbasiertes System mit automatischer Spracherkennung (ASR: Automatic Speech Recognition bzw. NLU: Natural Language Understanding) die eingegebenen Sprachinformationen analysiert, und zwar in Bezug auf die gesprochenen Wörter, auf deren Bedeutung und auch in Bezug auf die charakteristischen Merkmale des Sprechers. Die unterschiedlichen Ansätze sind anwendungsspezifisch zu sehen, so wie z.B. für die Spracheingabe bei der Texterfassung, für die Maschinen- und Automatensteuerung, etc.

Die derzeit verbreiteten ASR- bzw. NLU-Spracherkennungssysteme sind in der Lage, Äußerungen in Form ganzer Sätze zu erkennen. Hierbei weisen sie der jeweils erkannten Äußerung eine bestimmte Erkennungsgenauigkeit, beziehungsweise einen sogenannten confidence-level zu, der anzeigt, mit welcher Sicherheit eine in der Grammatik hinterlegte Äußerung vom System erkannt wurde. Dieser Wert liegt in der Regel zwischen "0" (nicht erkannt) und "100" (mit absoluter Sicherheit erkannt). Die Reaktion des Systems kann unter anderem an den ermittelten confidence-level gebunden werden. Die Schwellwerte, die zu bestimmten Reaktionen führen, sind dabei frei definierbar.

Aus dem Stand der Technik sind folgende Verfahren bekannt:

Das Dokument US2002/0160341 A1 offenbart ein Verfahren zur Ermittlung der sprachlichen Fähigkeiten eines Probanden mittels Spracherkennung.

Das Dokument EP0828240 A2 offenbart eine Vorrichtung zur Beurteilung der Nüchternheit eines Kraftfahrzeug-Fahrers mittels Analyse von Sprachmerkmalen, ohne Spracherkennung.

Die Aufgabe der Erfindung besteht darin, ein Verfahren zur Ermittlung der sprachlichen Fähigkeiten von Probanden anzugeben, das automatisch und vom Probanden steuerbar arbeitet.

Diese Aufgabe wird erfindungsgemäß durch die Merkmale des Patentanspruchs 1 gelöst.

Vorteilhafte Ausgestaltungen und weitere bevorzugte Merkmale der Erfindung ergeben sich aus den abhängigen Ansprüchen.

Das erfindungsgemäße Verfahren zeichnet sich dadurch aus, dass ein automatisches Spracherkennungssystem eingesetzt wird, mit dessen Hilfe sich die sprachlichen Fähigkeiten eines Probanden, zumindest grob, einstufen lassen.

In einer bevorzugten Ausgestaltung der Erfindung analysiert das Spracherkennungssystem einen vom System vorgegebenen und vom Probanden (nach)gesprochenen Text, wobei in Abhängigkeit einer vom System ermittelten Erkennungsgenauigkeit (confidence-level) des Textes die sprachlichen Fähigkeiten des Probanden bewertet werden. Dabei werden die sprachlichen Fähigkeiten des Probanden vom System umso höher bewertet, je höher die Erkennungsgenauigkeit des vom Probanden eingegebenen Textes ist.

Um die Schwierigkeit zu erhöhen und es dem Probanden nicht zu leicht zu machen, kann es sich bei dem zu sprechenden Text vorteilhaft um einen Zungenbrecher handeln.

Das Verfahren wird in bevorzugter Weise als hardware- und/oder software-basierte Anwendung eingerichtet und betrieben. Diese Anwendung kann in Verbindung mit einem Kommunikationssystem betrieben werden, oder als eigenständige Einheit (stand-alone-unit). Die Anwendung könnte zum Beispiel auch in ein Kommunikations- oder Unterhaltungsgerät integriert werden, wie zum Beispiel in ein Mobiltelefon.

In einer bevorzugten Ausgestaltung ist das Verfahren als Mehrwertdienst in einem Kommunikationssystem eingerichtet. Über eine spezielle (kostenpflichtige) Rufnummer bzw. IP-Adresse kann ein Proband die Anwendung anwählen und wird auf seine sprachlichen Fähigkeiten geprüft. Dabei kommuniziert der Proband mittels eines Kommunikationsendgeräts mit dem Spracherkennungssystem bzw. der Anwendung. Als geeignete Kommunikationsendgeräte kommen zum Beispiel ein herkömmliches (Mobil-)Telefon oder ein Personal Computer in Betracht.

In einer eher spiel- und spaßorientierten Variante kann das Verfahren Teil eines Verfahrens zur Ermittlung des Blutalkoholspiegels des Probanden sein, wobei die Anwendung die einem Probanden zugeordnete sprachliche Fähigkeit mit einem entsprechenden Blutalkoholwert assoziiert.

Ein Ausführungsbeispiel der Erfindung in Form eines Alkoholtesters wird nachfolgend erläutert.

Es handelt sich um eine natürlich-sprachliche "Fun"-Applikationen zur Ermittlung und Beurteilung der aktuellen Sprechfertigkeit eines Probanden. Die Applikation ist als Mehrwertdienst in einem Kommunikationssystem eingerichtet. Über eine spezielle Rufnummer bzw. IP-Adresse kann der Proband die Applikation über ein Telefon anwählen und wird auf seine sprachlichen Fähigkeiten geprüft.

Der Alkoholtester ist als eine Applikation konzipiert, die scheinbar zur Ermittlung des Blutalkoholspiegels des anrufenden Probanden führt. Die Applikation gibt dem Probanden einen gesprochenen Text vor, den der Proband wiederholen muss. Der vom Probanden nachgesprochene Text wird in einem Spracherkennungssystem analysiert. Erfindungsgemäß wird dabei eine dem erfassten Text vom Spracherkennungssystem zugeordnete Erkennungsgenauigkeit herangezogen. Die Erkennungsgenauigkeit kann in Prozent ausgedrückt zuwischen "0" und "100" eingestuft werden. Als Maßstab für die sprachlichen Fähigkeiten des Probanden dient also die Genauigkeit, mit der er(sie) den vorgesprochenen Text, vorzugsweise einen schwierigen Text, z.B. einen Zungenbrecher, wiederholen kann. Je geringer die ermittelte Erkennungsgenauigkeit der Äußerung des Probanden ist, desto höher wird der Blutalkoholspiegel angenommen.

Nachdem der Proband darauf hingewiesen wurde, dass die im folgenden gemachten Angaben zum persönlichen Blutalkoholspiegel ohne jede medizinische oder rechtliche Relevanz sind, wird er vom System aufgefordert, einen Zungenbrecher nachzusprechen. Je nach Erkennungsgenauigkeit, die der Anrufer erreicht, wird eine mehr oder weniger optimistische Prognose über den auf den Konsum von Alkohol bezogenen Zustand der Person gemacht.

Der Vorgang kann mit unterschiedlichen Zungenbrechern mehrfach wiederholt werden. Bei jeder Messung wird die Erkennungsgenauigkeit zum Beispiel einem von drei Bereichen zugeordnet, wobei die Zuordnung über die vom System an den Probanden auszugebenden Antwortprompts entscheidet.

In der nachfolgenden Tabelle ist ein möglicher verfahrensgemäßer Dialog zwischen der Applikation und einem Probanden dargestellt.
In der linken Spalte sind mögliche Dialog-Aktionen der Applikation angegeben, und in der mittleren Spalte mögliche Dialog-Aktionen des Probanden. Die rechte Spalte enthält einen Kommentar zum jeweiligen Verfahrensschritt und den damit verbundenen Aktionen:

| **Applikation** | **Testperson** | **Kommentar** |
|---|---|---|
| "Hallo und herzlich Willkommen beim Alkoholtester | | Proband kann jederzeit abbrechen (gilt überall) |
| "Vorweg: Der Alkoholtester analysiert augenzwinkernd Ihr Sprechvermögen und klärt Sie in amüsanter und unverbindlicher Weise über die Folgen Ihres Alkoholkonsums auf. Jetzt aber los: Wie hoch ist wohl Ihr Blutalkoholwert? Sprechen Sie mir nach:" <Zungenbrecher> | <Zungenbrecher> | Zungenbrecher werden abwechselnd ausgewählt und dem Probanden vorgespielt. Proband spricht Zungenbrecher nach |
| | | Applikation wertet die Spracheingabe des Probanden aus und errechnet daraus eine Erkennungsgenauigkeit |
| | | Die Erkennungsgenauigkeit wird verschiedenen Stufen (hoch, mittel, niedrig, null) zugeordnet. Je nach Zuordnung werden dem Probanden verschiedene Wertungsantworten ausgegeben. |
| 1. "Wow - ich bin beeindruckt. Entweder Sie sind voll nüchtern und ein Sprachgenie oder es ist bereits um Sie geschehen.° 2. "Toll - das bekommt man nur mit mindestens fünf Promille hin." 3. "Hey - der Kandidat hat 99 Punkte. Aber erst mit 100 sollten Sie weiterfahren." | | A. Erkennungsgenauigkeit = hoch; Antworten 1), 2) oder 3) abwechselnd |
| 1. "Gar nicht schlecht - aber das Fahren sollten Sie doch jemandem überlassen, der noch sprechen kann." 2. "Beeindruckend - die menschliche Sprache - wenn man Sie denn versteht." 3. "Ich hab da so meine Zweifel - was Ihren Zustand betrifft." | | B. Erkennungsgenauigkeit = mittel; Antworten 1), 2) oder 3) abwechselnd |
| 1.. "Na na - das wird wohl heute nichts mehr - mit dem Fahren. 2. "Hm - ich schwanke noch, Ihren Zustand bedenklich oder aussichtslos zu nennen." 3. "Nana - da gönnen wir uns wohl erst mal eine Pause!" | | C. Erkennungsgenauigkeit niedrig; Antworten 1), 2) oder 3) abwechselnd |
| 1. "Uuups - das war wohl nix." 2. "Eijeijei - ganz schwieriger Fall." 3. "Haaalooo - ich rate Ihnen, sich in ärztliche Behandlung zu begeben." | | D. Erkennungsgenauigkeit = 0; Antworten 1), 2) oder 3) abwechselnd |
| | | |
| "Noch ein Alkoholtest" | <Ja> | |
| "O.K. Zur Sicherheit" | | |
| ... | | Weiter Testdurchlauf |
| "Was jetzt" | <Ende> | Hauptmenü |
| "Tschüss bis zum nächsten mal bei diesem Alkoholtest | | Beenden |

Im Rahmen des Verfahrens können verschiedene Zungenbrecher verwendet werden. Mögliche Zungenbrecher sind:
Deutsch:
   - Der dünne Dackel düst daher, doch dummerweise ist da Teer.
   - Esel essen Nesseln nicht, Nesseln essen Esel nicht.
   - Der bullige Bär in Birnen beißt, der bärtige Bauer Bernhard heißt.
   - Dreißig Greise treten drei Treppen krumm, drei Treppen krumm treten dreißig Greise.
   - Im dichten Fichtendickicht sind dicke Fichten wichtig.
   - Es klapperten die Klapperschlangen, bis ihre Klappern schlapper klangen.
   - Die Katzen kratzen im Katzenkasten, im Katzenkasten kratzen Katzen.
   - Flankenkicker Flick kickt flinke Flanken. Flinke Flanken kickt
   - Flankenkicker Flick.
   - Es ist verboten, toten Kojoten die Hoden zu verknoten!
Englisch:
   - Which wristwatch is a Swiss wristwatch?
   - Black background, brown background

## Patentansprüche

1. Verfahren zur Ermittlung der sprachlichen Fähigkeiten eines Probanden, wobei ein automatisches Spracherkennungssystem eingesetzt wird, das einen vom System vorgegebenen und vom Probanden nachgesprochenen Text analysiert, wobei in Abhängigkeit einer vom System ermittelten Erkennungsgenauigkeit des Textes die sprachlichen Fähigkeiten des Probanden bewertet werden
**dadurch gekennzeichnet,**
**dass** das Verfahren Teil eines Verfahrens zur Ermittlung des Blutalkoholspiegels des Probanden ist, wobei ein Verfahrensschritt die einem Probanden zugeordnete sprachliche Fähigkeit mit einem entsprechenden Blutalkoholwert assoziiert.

2. Verfahren nach einem der vorhergehenden Ansprüche, **dadurch gekennzeichnet, dass** die sprachlichen Fählgkeiten des Probanden umso höher bewertet werden, je höher die Erkennungsgenauigkeit des vom Probanden eingegebenen Textes ist.

3. Verfahren nach einem der vorhergehenden Ansprüche, **dadurch gekennzeichnet, dass** als vorgegebener Text ein Zungenbrecher verwendet wird.

4. Verfahren nach einem der vorhergehenden Ansprüche, **dadurch gekennzeichnet, dass** es als hardware- und/oder software-basierte Anwendung eingerichtet und betrieben wird.

5. Verfahren nach einem der vorhergehenden Ansprüche, **dadurch gekennzeichnet, dass** die Anwendung in Verbindung mit einem Kommunikationssystem betrieben wird.

6. Verfahren nach einem der vorhergehenden Ansprüche, **dadurch gekennzeichnet, dass** die Anwendung als eigenständige Einheit betrieben wird.

7. Verfahren nach einem der vorhergehenden Ansprüche, **dadurch gekennzeichnet, dass** das Verfahren als Mehrwertdienst in einem Kommunikationssystem eingerichtet ist.

8. Verfahren nach einem der vorhergehenden Ansprüche, **dadurch gekennzeichnet, dass** der Proband mittels eines Kommunikationsendgeräts mit dem Spracherkennungssystem kommuniziert.

## Claims

1. Method for determining the linguistic abilities of a test subject, an automatic voice recognition system which analyses a text preset by the system and repeated by the subject being used, the linguistic abilities of the subject being evaluated as a function of an accuracy of recognition of the text determined by the system, **characterised in that** the method forms part of a method for determining the blood alcohol level of the subject, one step of the method associating the linguistic ability assigned to a subject with a corresponding blood alcohol value.

2. Method according to one of the preceding claims, **characterised in that** the linguistic abilities of the subject are evaluated higher, the higher the accuracy of recognition of the text entered by the subject.

3. Method according to one of the preceding claims, **characterised in that** a tongue-twister is used as the preset text.

4. Method according to one of the preceding claims, **characterised in that** it is designed and run as a hardware- and/or software-based application.

5. Method according to one of the preceding claims, **characterised in that** the application is run in conjunction with a communications system.

6. Method according to one of the preceding claims, **characterised in that** the application is run as an independent unit.

7. Method according to one of the preceding claims, **characterised in that** the method is designed as a value-added service in a communications system.

8. Method according to one of the preceding claims, **characterised in that** the subject communicates with the voice recognition system by means of a communications terminal.

## Revendications

1. Procédé pour déterminer l'élocution d'une personne soumise à des tests, selon lequel on utilise un système automatique de reconnaissance vocale qui analyse un texte prédéfini par le système et répété par la personne, et qu'en fonction d'une précision de reconnaissance du texte déterminée par le système, l'élocution de la personne est évaluée,
**caractérisé en ce que** le procédé fait partie d'un procédé pour déterminer le taux d'alcoolémie de la personne soumise au test, un étape de procédé associant l'élocution attribuée à une personne à une valeur d'alcoolémie correspondante.

2. Procédé selon l'une des revendications précédentes, **caractérisé en ce que** plus la précision de reconnaissance du texte entré par la personne soumise au test est élevée, plus l'élocution de la personne est jugée élevée.

3. Procédé selon l'une des revendications précédentes, **caractérisé en ce qu'**on utilise comme texte prédéfini un texte difficile à prononcer.

4. Procédé selon l'une des revendications précédentes, **caractérisé en ce qu'**il est installé et utilisé sous forme d'application basée sur un matériel et/ou un logiciel.

5. Procédé selon l'une des revendications précédentes, **caractérisé en ce que** l'application est utilisée en liaison avec un système de communication.

6. Procédé selon l'une des revendications précédentes, **caractérisé en ce que** l'application est utilisée sous forme d'unité autonome.

7. Procédé selon l'une des revendications précédentes, **caractérisé en ce qu'**il est installé comme service à valeur ajoutée dans un système de communication.

8. Procédé selon l'une des revendications précédentes, **caractérisé en ce que** la personne soumise au test communique avec le système de reconnaissance vocale à l'aide d'un terminal de communication.
